# EUROPEAN PATENT APPLICATION

(11) **EP 4 257 559 A1**
(43) Date of publication of application: **11.10.2023**
(21) Application number: 22217049.0
(22) Date of filing: 28.12.2022
(51) Int. Cl.: C02F 11/148, C02F 11/13, C10L 5/46, C10L 5/44

(54) **A PROCESS FOR PRODUCING BIOFUEL FROM WASTEWATER TREATMENT SLUDGE**

(30) Priority: 05.04.2022 SI 202200047
(71) Applicant: EKO d.o.o. Krsko, 8270 Krsko (SI); JB energija d.o.o., 8273 Leskovec (SI)
(72) Inventor: Rostohar, Boris, 8270 Krsko (SI)
(74) Representative: Patentni Biro AF d.o.o.

(57) **Abstract**

The process for production of biofuel from the wastewater treatment plant sludge which comprises mixing drained wastewater treatment plant sludge with added dry and semi-dry organic fuel, such as wood waste, plant straw, sawdust, charcoal powder, etc., extrusion during the phase of mixing the generated material, shaping the material, generally into granules, briquets and pellets, and drying the produced biofuel. The drained sludge of wastewater treatment plants serves as a bonding agent during the fuel production according to the present invention. In view of the prior, the process has numerous economic advantages, since it makes use of drained sludge from wastewater treatment plants which represents a serious environmental issue, the invented technological process requires no special equipment to be constructed for this purpose, the biofuel produced on the basis of the present invention can be used in existing stoves for solid fuel, and in addition, this biofuel is clean fuel and renewable energy source.

## Description

### Field of the invention

The invention relates to a process for production of compact biofuel from drained sludge from wastewater treatment plants and various materials including wood waste, plant straw, sawdust, wood dust, etc. by way of mixing these materials with sludge. The wastewater treatment plant sludge is used as a binder in the further process of fuel production.

### Background and the technical problem

Large amounts of wastewater generated in urban and industrial areas is collected in wastewater treatment plants which generate sludge in the form of gelatine, thixotropic fluid material comprising up to 75 to 95% of water and from 5% to 25% of solid matter. During the drain process by adding flaking substance, the mud from the treatment plants (approximately 1% to 2% of solid matter) thickens by way of mechanical thickening to up to 5% to 25% of solid matter.

Sludge generated by various municipal and industrial treatment plants and in industrial facilities differ in their composition and consistency. They comprise solid, organic and non-organic matter dissolved in water and biological material (bacteria, viruses, fungi, archaea, etc.). Occasionally or permanently the sludge contains material harmful for the environment and humans, due to heavy metals, solvents, pathogenic bacteria, virus, fungi, etc. The wastewater treatment sludge is one of the most voluminous wastes generated in urban areas and one of the heaviest burdens for the wastewater treatment operators is the sludge disposal.

Disposing sludge at dumps is prohibited by law because of the high organic content and potential methanogenesis. Sludge, as waste material, contains organic compounds and certain energy potential since it contains completely dehydrated sludge with more than 90% of solid matter with the heating value of 15 - 20 MJ/kg, depending on the sludge, meaning the heating value being similar to the one of brown-coal.

### Prior art

There are several technical solutions related to sludge removal in view of its useful or at least undangerous use. The main ones are as follows: recycling, heat treatment and long-term storage of stabilised mud for further phosphate production.

Composting is being practiced at present disposal sites as the coverage gradually covering the depo top with greenery. Sludge can be composted in the open air with greenery waste, branches and grass which turns into biological fertiliser with suitable mixing. The compost is packed into bags of different sizes and sold in the market as a fertiliser for gardens and agricultural land.

Mechanical drying is carried out on mesh conveyer belts, rotary drying devices, in solar chambers and kneading disk drying units. The objective of drying is to reduce the sludge mass and volume. The resulting sludge is in the form of powder and is used for burning in electricity production. The heat deactivation of biological subsystems is achieved by heating the sludge or by way of sludge drying at high temperatures. Covering degraded land with sludge has been lately prohibited by law. The actual problem in the further sludge treatment is the cost of drying energy, transport and cost for disposal and the removal of sludge in relation to its useful or undangerous use.

### Brief description of the invention

Limitations of the above processes of dehydration of the sludge of municipal and industrial origin led to the development of the present invention. The essence of the present invention is in the mixing of drained sludge with dry or semi-dry organic fuel for production of fuel.

The process according to the invention has several advantages in comparison to the prior art:
- the process is based on the use of drained sludge from wastewater treatment plants;
- to implement the present invention, there is no need for special devices to be made for this purpose;
- the biofuel produced with this technological process can be used in the existing combustion installations made for solid fuel;
- the biofuel produced is clean fuel and renewable energy;
- biofuel produced with the present invention if of a shape suitable for packaging in bags and transport as well as for use in bulk;
- the odour emissions in the mixing phase is minimal due to absorption effect of active charcoal and organic matter.

### Detailed description of the invention

The invention will be further described in more detail below using figures, which show:
- Figure 1: Technological process scheme
- Figure 2: Physical forms of biofuel according to the present invention

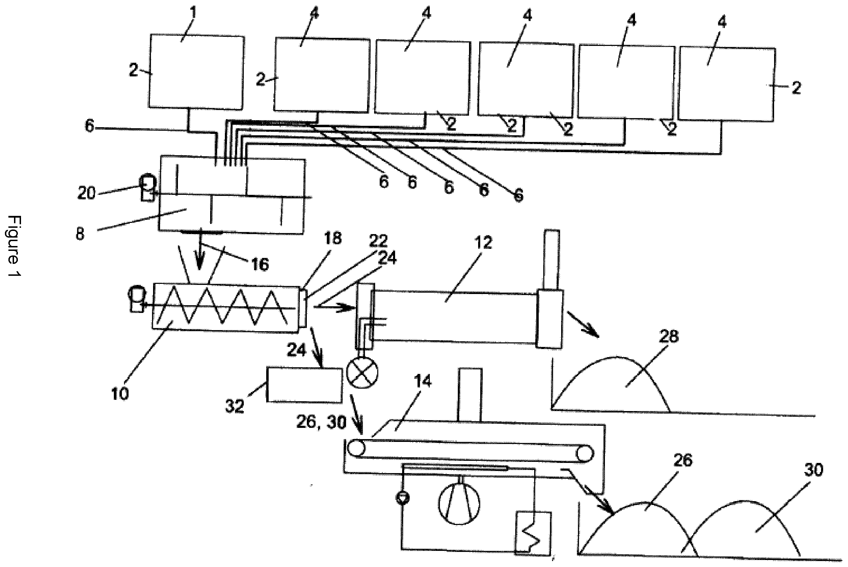

The production of fuel from drained sludge (1) from wastewater treatment plants is caried out by the technological process schematically illustrated in Figure 1. The drained sludge (1) and dry and semi-dry organic fuel (4) are stored (2), mainly in a form of containers or in general raw material stores. During the process, this material is transported by a transporting device (6) into a mixer (8), followed by an extruder (10), then into a granulator with the drying function (12) and a dryer (14). The process is carried out in sequence order as shown in Figure 1. The above-mentioned building blocks included in the technological process are in general technologically connected; therefore, the process of biofuel production according to the invention can be carried out continuously or cyclically.

Dry or semi-dry organic fuel (4) is stored in raw-material stores (2). It is transported into mixers (8) by way of different transportation devices, including carriers (6) like conveyer belts, screw conveyers, etc.

The mixer (8) is generally closed, it can be uniaxial or biaxial. The design includes mixing blades inside the mixer (8) whose function is to mix the feed wastewater sludge (1) and the dry or semi-dry organic fuel (4).

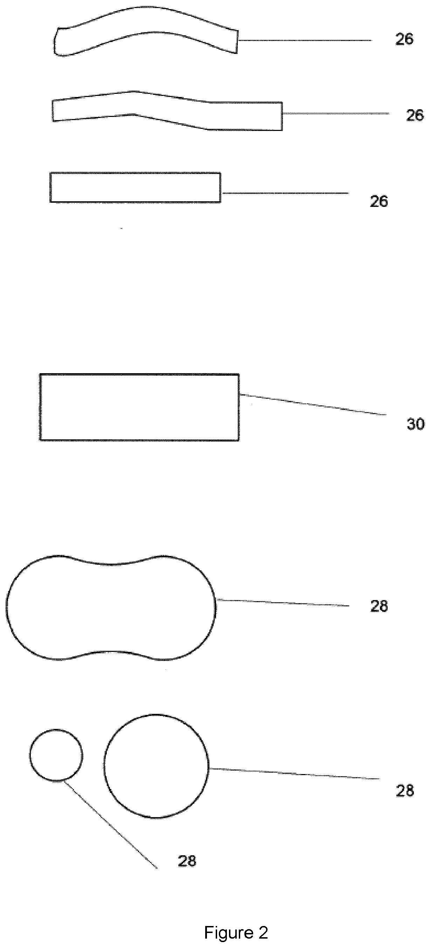

Extruder (10) is of a standard type and generally includes three divisions: feed unit to accept slightly dough-like material (16) from the mixer (8), further inside the extruder (10) there is a unit for pressing the material, such as screw cylinders, and a matrix (18) at the exit (10), in general of a circular shape and is provided with openings (22), spread on the surface of the matrix (18), i.e. in concentric circles. Physical forms of the biofuel according to the invention depend on the diameter and the shape of the openings (22) and are shown in Figure 2.

Granulation is carried out in a granulator with the drying function (12) having mainly tubular shape. The internal part of the granulator with the drying function (12) is heated by gas or fuel oil or own bio-fuel.

Pellets (26) and briquets (30) are dried in a dryer (14), mainly of a conveyer belt design which in its inside generally comprises one or more counter-direction belts. The inside of the dryer (14) is heated by means of a heating unit.

The process for production of biofuel according to the present invention and as schematically shown in Figure 1 represents an exemplary embodiment of the technological solution of the invention and in no ways limits the broadness of the invention. The process for biofuel production from wastewater sludge (1) from wastewater treatment plants is carried out in several stages. The sludge used for the production of biofuel according to the invention is drained sludge (1) from various treatment plants, usually with different humidity content. The process of biofuel production from drained sludge (1) begins with filling up the Mixer (8).

During the first stage, the mixer (8) is filled up with drained sludge (1) and dry and semi-dry organic fuel (4).

In general, the following components are used as feed material:
- drained sludge (1) comprising up to 95% of water,
- and the following dry and semi-dry organic fuel (4):
- activated carbon powder, in general comprising up to 10% of water,
- followed by chips of organic plant straw, in general comprising up to 25% water,
- wood chips, comprising up to 30% water,
- sawdust and wood powder, comprising in general up to 20% water.

The above-mentioned components are not bonded together.

This mix of the material is typical for the test production; however, it does not narrow the invention and is used only for demonstrating the invention process. The components of the feed material are any suitable renewable sources. Non-renewable sources such as coal dust are not suitable. The optimal thickness of all components fed into the mixer (8) depends on the ratio between the dry and humid material in the mixer. The thickness of the material in mixer (8) is optimal and allows for the easy pressing and extraction of liquid at the outlet from the extruder (1), if approximately 50% of dryness is provided. However, the feed material may have up to 95% water content.

The second stage of the technological process of the present invention includes the mixing of the components in the mixer (8). The rotation of the mixing blades inside the mixer (8) provides for the drained sludge (1) and the dry and semi-dry organic fuel (4) to be thoroughly blended. The mixing also leads to the bonding of dry and semi-dry organic fuel (4) with particles of drained sludge (1) and obtaining humidity evenly spread. The mixing in this phase lasts for about 15 minutes, depending on the mixed material of drained sludge (1) and dry and semi-dried organic matter (4).

When the material in the mixture is sufficiently bonded and shows no signs of sticking onto the walls of the mixer and is suitably free-flowing, it is ready to proceed to the next technological step. Slightly dough-like material (16) exiting the mixer (8) with humidity at about 50% produces no dust and is ready to proceed to further processing into a compact shape of bio-fuel. The mixture prepared in this way gives less bad odour due to deactivation caused by active charcoal, it is black in colour and non-sticky to machine parts.

This dough-like material (16) is transferred from the mixer (8) through a feeding ingress device, i.e. a funnel into the interior of the extruder (10). Inside the extruder (10), the material travels from the ingress point towards the point of exit from the extruder (10). Due to pressure, generated inside the extruder (10), the material presses against the matrix (18) and is extruded through its openings (22). By alternating the matrix (18), various types of fuel can be produced, in general different in their shape and dimensions. The homogenised substance in a form of humid dough-like material (16) which entered the extruded (8), generally takes tubular shape (24) when exiting the matrix (18), the shape depending on the shape of the openings (22) of the matrix (18).

If biofuel is produced in the shape of granules (18), the above-mentioned material is generally transferred in tubular shape (24) from the egress of the extruder (10) into a granulator with the drying function (2), where the material (24) is formed into granules (28) and is dried at a temperature of up to 400°C. At the entrance into the granulator with the drying function (12), the temperature is approximately 400 °C, later the temperature drops to 120 °C at the exit when the granules (28) are ready for transport.

If biofuel is produced in the shape of pallets (26) and briquets (30), the extruded homogenised material in a form of humid dough-like material (16), which has entered the extruder (8), is extruded through the openings (22) and on hydraulic presses or mechanical presses shaped into humid pallets (26) and briquets (30), which are transferred to the ingress point of the dryer (14).

Once in the dryer (14), which is of belt or rotating design, the pellets (26) or briquets (30) enter the dryer (14) into the system of mesh belts and travel through the system. Drying takes place at the temperature of below 80 °C. When the drying in the drier (14) is finished, the process is completed.

Various types of bio-fuel can be produces by the present invention from the same constituents: pellets (26), granules (28), and briquets (30), which differ in their physical shape, as shown in Figure 2. Dimensions and shapes of the bio-fuel according to the present invention are adjusted to meet the requirements of the end-user/device (stove) and the shapes and dimensions are not limiting for the invention.

Pellets (26) are generally of cylindric chape, with the diameter approximately 5 to 10 mm and are up to 50 mm long. The briquets (30) are also generally cylindrical, with diameter from 50 to 150 mm, and with an average length approximately 300 mm. Granules (28) are generally round or oval in shape, with diameter from 10 to 35 mm.

The fuel produced with the above-described process according to the invention has no odour due to use of the odour-binding materials, such as activated carbon, sawdust and/or wood powder. Its dimensions and shape are suitable for use in stoves and for pyrolysis of bio-fuel in thermal reactor, when fuel is used in coproduction of heat and electricity. The process according to the invention, differs from prior art disclosures and enables the production of biofuel from drained sludge of wastewater treatment plants. In comparison to known solutions, it has several advantages as listed below. In general, the invention offers problem solution linked with further sludge treatment, including cost of energy for drying, transport and cost of the disposal, sludge removal associated with its exploitable or at least its harmless use. It is suitable for continuous and cyclical production and allows for large quantity of sludge recycling into biofuel, such as the capacity of 10 t/h. Biofuel produced by the process is ecological and is classified as a renewable energy source. The process is technologically undemanding since no special devices need to be constructed and commercially available devices can be used. Biofuel, produced with the invented process, is suitable for transport, it can be used in all existing stoves for solid fuels. A significant advantage is also that the odour emission during the mixing stage is negligible.

## Claims

1. A process for production of biofuel from wastewater treatment plant sludge, **characterized in that** the process comprises the following stages:
- feeding a mixer with feed material comprising drained wastewater treatment sludge and dry and/or semi-dry organic fuel;
- mixing the drained sludge with the dry and semi-dry organic fuel to the level when these components bond together in a paste or dough-like material;
- reshaping of the bonded material from the previous step into a suitable form; and
- drying the bio-fuel produced in the previous step.

2. The process for production of biofuel from the wastewater treatment plant sludge according to claim 1, **characterized in that** the sludge comprises up to 95% humidity.

3. The process for production of biofuel from the wastewater treatment plant sludge according to claim 1 or claim 2, **characterized in that** the dry and semi-dry organic fuel comprises from 0 to 30% humidity.

4. The process for production of biofuel from the wastewater treatment plant sludge according to any claim from 1 to 3, **characterized in that** activated carbon and/or wood powder and/or sawdust is added to the mixture prior to reshaping.

5. The process for production of biofuel from the wastewater treatment plant sludge according to any claim from 1 to 4, **characterized in that** the suitable form in reshaping step is selected in the group consisting of granules, briquets, and pellets the final products can have the shape of granules, pallets or briquets.

6. The process for production of biofuel from the wastewater treatment plant sludge according to any claim from 1 to 5, **characterized in that** the feed material are any suitable renewable sources.

7. The process for production of biofuel from the wastewater treatment plant sludge according to any claim from 1 to 6, **characterized in that** the feed material comprises:
- drained wastewater treatment sludge (1) comprising up to 95% of water,
- and the following dry and semi-dry organic fuel (4):
∘ activated carbon powder, in general comprising up to 10% of water,
∘ chips of organic plant straw, in general comprising up to 25% water,
∘ wood chips, comprising up to 30% water,
∘ sawdust and wood powder, comprising in general up to 20% water.

8. The process for production of biofuel from the wastewater treatment plant sludge according to any claim from 1 to 7, **characterized in that** the dry and/or semi-dry organic fuel (4) is stored in raw-material stores (2) and is transported into mixers (8) by way of different transportation devices, including carriers (6) like conveyer belts and/or screw conveyers.

9. The process for production of biofuel from the wastewater treatment plant sludge according to any claim from 1 to 8, **characterized in that**

10. The process for production of biofuel from the wastewater treatment plant sludge according to any claim from 1 to 9, **characterized in that** mixing lasts for about 15 minutes.

11. The process for production of biofuel from the wastewater treatment plant sludge according to any claim from 1 to 10, **characterized in that** reshaping is performed with an extruder.
